# DEMANDE DE BREVET EUROPEEN

(11) **EP 4 446 607 A1**
(43) Date de publication de la demande: **16.10.2024**
(21) Numéro de dépôt: 24167506.5
(22) Date de dépôt: 28.03.2024
(51) Int. Cl.: F16D 11/14, F16D 41/04, F16D 41/06

(54) **MÉCANISME DE TRANSMISSION**

(30) Priorité: 14.04.2023 FR 2303771
(71) Demandeur: VALEO EMBRAYAGES, 80009 Amiens (FR)
(72) Inventeur: LEBAS, Gilles, 80009 Amiens (FR); COMMEINE, Emmanuel, 80009 Amiens (FR); GEFFROY, Elie, 80009 Amiens (FR)
(74) Mandataire: Valeo Powertrain Systems

(57) **Abrégé**

Un mécanisme de transmission (5) pour une boîte de vitesses (2) comporte: un premier arbre (6), une première roue menée (7) guidée en rotation sur le premier arbre (6), un mécanisme de commutation (9) et un dispositif de roue libre (11). Le dispositif de roue libre (11) comprend un organe de verrouillage (12) coopérant en rotation avec d'une part le premier arbre (6) et avec d'autre part la première roue menée (7). La première roue menée (7) comporte une première denture (8) qui coopère en rotation avec une deuxième denture (10) du mécanisme de commutation (9) dans une première position engagée et qui ne coopère pas en rotation avec la première denture (8) dans une deuxième position désengagée. La première denture (8) et la deuxième denture (10) recouvrent axialement au moins en partie l'organe de verrouillage (12) dans la première position engagée.

## Description

### DOMAINE TECHNIQUE DE L'INVENTION

L'invention se rapporte à un mécanisme de transmission, destiné à l'entraînement d'un engin motorisé. Le mécanisme de transmission peut être par exemple une boîte de vitesses apte à être associée à un moteur électrique. L'engin motorisé peut être par exemple un véhicule automobile, ou un véhicule dit commercial, tel qu'un poids lourd.

### ÉTAT DE LA TECHNIQUE ANTÉRIEURE

Dans une telle application, il est couramment recherché de proposer un système à transmission à deux vitesses capable de changer de rapport de vitesse sans interruption de puissance, notamment pour un véhicule électrique.

Il est connu, par exemple de la demande WO 2022/0028561, un système de transmission à deux vitesses comprenant :
- une roue libre montée sur un arbre d'entrée et couplée à un premier engrenage ;
- un embrayage multi-disques monté sur l'arbre d'entrée ayant un moyeu ;
- un deuxième engrenage monté libre sur l'arbre d'entrée et comprenant une denture externe adaptée pour s'engager avec le moyeu de l'embrayage multi-disques ; et
- dans lequel, lorsque le premier rapport en marche avant du véhicule est sélectionné, la roue libre est adaptée pour tourner pour entraîner le véhicule et l'embrayage multi-disques est en position désengagée.

Un tel système permet d'obtenir de manière simple et économique la possibilité de changement de rapport de vitesse en combinant d'une part les propriétés intrinsèques de blocage et de déblocage de la roue libre en fonction des conditions de vitesses qui lui sont appliquées, et d'autre part la gestion contrôlée du passage progressif de la position engagée à la position désengagée de l'embrayage multi-disques. En supplément, ce système comporte également un dispositif d'embrayage destiné à court-circuiter la roue libre afin de permettre la transmission de puissance lors des phases de fonctionnement du véhicule en marche arrière ou en phase de décélération lorsque le premier rapport est sélectionné,

Cependant un tel système présente plusieurs inconvénients par le fait que l'ensemble des composants, notamment la roue libre et l'embrayage multi-disques, sont montés sur l'arbre d'entrée :
- les composants tournent tous directement à la vitesse du moteur qui peut s'avérer très grande, typiquement jusqu'à 20000 tr/min pour les moteurs électriques, et a pour effet de générer des problématiques multiples de contraintes mécaniques ou de couple de traînée excessifs ;
- l'addition des dimensions axiales des composants sur le même arbre génère un encombrement total important qui peut s'avérer incompatible avec l'espace disponible alloué par le véhicule.

### EXPOSÉ DE L'INVENTION

L'invention vise à remédier à ces problèmes et elle y parvient, selon l'un de ses aspects, en proposant un mécanisme de transmission pour une boîte de vitesses à plusieurs rapports, le mécanisme de transmission comprenant :
- un premier arbre ayant un premier axe de rotation ;
- une première roue menée, notamment sous forme d'un engrenage, coaxiale avec le premier axe de rotation et guidée en rotation sur le premier arbre, la première roue menée comprenant une première denture ;
- un mécanisme de commutation mobile entre au moins une première position engagée et une deuxième position désengagée, ledit mécanisme de commutation comprenant une deuxième denture qui coopère en rotation avec la première denture dans la première position engagée et qui ne coopère pas en rotation avec la première denture dans la deuxième position désengagée ;
- un dispositif de roue libre comprenant un organe de verrouillage coopérant en rotation directement ou indirectement avec d'une part le premier arbre, et coopérant en rotation directement ou indirectement avec d'autre part la première roue menée ;
la première denture et la deuxième denture recouvrant axialement au moins en partie l'organe de verrouillage dans la première position engagée.

Grâce à la superposition axiale du dispositif de roue libre par les dentures du mécanisme de commutation et de la première roue menée, il est possible de réduire la longueur axiale totale du mécanisme de transmissions pour obtenir une structure particulièrement compacte.

Au sens de la présente demande :
- « axialement » signifie « parallèlement à l'axe de rotation du premier arbre » ;
- « radialement » signifie « le long d'un axe appartenant à un plan orthogonal à l'axe de rotation du premier arbre et coupant cet axe de rotation du premier arbre» ;
- « angulairement » ou « circonférentiellement » signifie « autour de l'axe de rotation du premier arbre » ;
- les termes "externe" et "interne" sont utilisés pour définir la position relative d'un composant ou d'une portion de composant, par rapport à un autre composant ou à une autre portion de composant, par référence à l'axe de rotation pour lequel ils sont concentriques, un composant proche dudit axe est ainsi qualifié d'interne par opposition à un composant externe situé radialement en périphérie ;
- « solidarisé » signifie « rigidement couplé ».
- un composant est « guidé en rotation » sur ou par un autre composant lorsque ces deux composants sont mobiles l'un par rapport à l'autre uniquement autour d'un axe de rotation commun, ce type de liaison étant aussi nommé « liaison pivot ».

Selon une caractéristique supplémentaire de l'invention, l'organe de verrouillage comporte une partie radialement interne qui coopère en rotation, directement ou via une bague interne, avec le premier arbre et une partie radialement externe qui coopère en rotation, directement ou via une bague externe, avec la première roue menée.

Cette dernière caractéristique permet d'améliorer la tenue mécanique de la roue libre car l'entraînement de l'organe de verrouillage s'effectue par sa partie radialement interne, les vitesses tangentielles de frottement appliquées sur l'organe de verrouillage étant ainsi moins importantes que si l'entraînement de la roue libre était réalisé par sa partie radialement externe.

Cette dernière caractéristique permet également de simplifier la structure et l'assemblage du mécanisme de commutation car la roue libre n'est pas assemblée ni en contact avec le mécanisme de commutation.

Selon une caractéristique supplémentaire, la roue menée comporte une portion d'extension s'étendant axialement, la portion d'extension comportant une surface radialement interne pour coopérer en rotation avec la partie radialement externe de l'organe de verrouillage et une surface radialement externe supportant la première denture.

Selon une caractéristique supplémentaire de l'invention, la première denture et la deuxième denture recouvre axialement 20 à 100% de la longueur axiale de l'organe de verrouillage dans la première position engagée, de préférence la première denture et la deuxième denture recouvre axialement 40 à 100% de la longueur axiale de l'organe de verrouillage dans la première position engagée.

Ainsi, l'amélioration de ce recouvrement axial permet non seulement d'augmenter la compacité, mais aussi de réduire les contraintes mécaniques grâce à une répartition de la charge mieux répartie et plus homogène lors de la transmission de couple entre la première denture et la deuxième denture.

Selon une caractéristique supplémentaire de l'invention, le mécanisme de commutation est un embrayage à crabot, la deuxième denture pouvant s'insérer axialement par coopération de formes dans la première denture lors du passage de la deuxième position désengagée à la première position engagée.

L'embrayage à crabot présente l'avantage de comporter peu de composants, ce qui apporte une solution robuste, compacte et économique.

Selon une caractéristique supplémentaire de l'invention, l'organe de verrouillage comprend notamment un ensemble de rouleaux ou de cames ou de cliquets.

Selon une caractéristique supplémentaire de l'invention, le mécanisme de transmission comprend en outre :
- une deuxième roue menée coaxiale avec le premier axe de rotation et fixée en rotation sur le premier arbre ;
- un second arbre ayant un second axe de rotation parallèle au premier axe de rotation ;
- une troisième roue menée coaxiale avec le second axe de rotation, fixée en rotation sur le second arbre et coopérant en rotation avec la première roue menée pour former un premier rapport de réduction de vitesse entre le premier arbre et le second arbre ;
- une quatrième roue menée coaxiale avec le second axe de rotation, guidée en rotation sur le second arbre et coopérant en rotation avec la deuxième roue menée pour former un second rapport de réduction de vitesse entre le premier arbre et le second arbre ; et
- un embrayage à friction coaxial au second axe de rotation, l'embrayage à friction étant apte à coupler et désaccoupler en rotation la quatrième roue menée et le second arbre.

Cette dernière caractéristique de l'invention présente l'avantage de proposer une architecture de mécanisme de transmission à deux rapports de vitesse particulièrement compacte. En effet, l'embrayage à friction n'étant pas disposé sur le même axe que l'axe du dispositif de roue libre et du mécanisme de commutation, il devient possible de choisir avantageusement des positions relatives axiales et radiales de chaque composant porté par le premier arbre et par le second arbre afin de réduire l'espace total occupé par le mécanisme de transmission. Par exemple, l'embrayage à friction peut être avantageusement positionné axialement d'un côté ou de l'autre de la quatrième roue menée de façon à se situer axialement en face d'un espace axial laissé libre par les composants portés par le premier arbre. De même, l'ensemble constitué par le mécanisme de commutation et dispositif de roue libre peut être avantageusement positionné axialement d'un côté ou de l'autre de la première roue menée de façon à se situer axialement en face d'un espace axial laissé libre par les composants portés par le second arbre.

L'embrayage à friction permet une transmission du couple progressive dans les phases d'engagement et de désengagement et donc de favoriser le changement de rapport de vitesse du véhicule sans interruption de puissance.

Selon une caractéristique supplémentaire de l'invention, l'embrayage à friction comporte plusieurs disques de frottement.

L'utilisation de plusieurs disques de frottement permet d'augmenter le couple transmissible par l'augmentation du nombre de faces en contact, et ainsi rendre possible l'utilisation d'un embrayage de diamètre faible.

Selon une caractéristique supplémentaire de l'invention, le premier rapport de réduction de vitesse est supérieur au second rapport de réduction de vitesse.

Le premier rapport de réduction de vitesse peut être choisi par exemple pour rendre apte le démarrage du véhicule dans une pente où une importante valeur de couple à la roue est nécessaire. Le deuxième rapport de réduction de vitesse peut être choisi par exemple pour obtenir une vitesse maximale du véhicule suffisante sur autoroute.

Selon une caractéristique supplémentaire de l'invention, le premier rapport de réduction de vitesse est compris entre 3 et 4.

Selon une caractéristique supplémentaire de l'invention, le second rapport de réduction de vitesse est compris entre 1,5 et 2,5.

Selon un premier mode de réalisation de l'invention, le mécanisme de transmission peut comprendre en outre :;
- une cinquième roue menée fixée en rotation sur le second arbre ;
- un troisième axe de rotation parallèle au second axe de rotation ;
- une sixième roue menée coaxiale au troisième axe de rotation et coopérant en rotation avec la cinquième roue menée pour former un troisième rapport de réduction de vitesse ; et
- un mécanisme différentiel fixé sur la sixième roue menée.

Ce premier mode de réalisation de l'invention présente l'intérêt de pouvoir ajouter un troisième rapport de réduction nécessaire pour atteindre les plages de couple et de vitesse à la roue adaptées à l'utilisation et à l'agrément du véhicule.

Selon une caractéristique supplémentaire de l'invention, le troisième rapport de réduction de vitesse est compris entre 3 et 4.

La combinaison du premier rapport de réduction de vitesse avec le troisième rapport de réduction de vitesse donne un rapport de réduction total de 9 à 16.

La combinaison du second rapport de réduction de vitesse avec le troisième rapport de réduction de vitesse donne un rapport de réduction total de 4,5 à 10.

Selon une caractéristique supplémentaire du premier mode de réalisation de l'invention, le premier arbre est apte à être entraîné en rotation par un arbre de sortie d'une machine électrique de traction.

Selon un deuxième mode de réalisation de l'invention, le mécanisme de transmission peut comprendre en outre :
- une cinquième roue menée fixée en rotation sur le premier arbre ;
- un troisième axe de rotation parallèle au second axe de rotation ;
- une sixième roue menée coaxiale au troisième axe de rotation et coopérant en rotation avec la cinquième roue menée pour former un troisième rapport de réduction de vitesse ; et
- un mécanisme différentiel fixé sur la sixième roue menée.

Selon une caractéristique supplémentaire du deuxième mode de réalisation de l'invention, le second arbre est apte à être entraîné en rotation par un arbre de sortie d'une machine électrique de traction.

Selon une caractéristique supplémentaire de l'invention, la première roue menée et la troisième roue menée sont des engrenages, et/ou la deuxième roue menée et la quatrième roue menée sont des engrenages, et/ou la cinquième roue menée et la sixième roue menée sont des engrenages.

Les engrenages permettent de garantir une transmission du couple de manière silencieuse et avec un bon niveau de rendement grâce aux faibles pertes par frottement.

Le mécanisme de transmission selon l'invention peut présenter l'une ou l'autre des caractéristiques décrites ci-dessous combinées entre elles ou prises indépendamment les unes des autres :
- la première roue menée est guidée en rotation sur l'arbre par un moyen de guidage tel qu'un roulement à aiguilles, un roulement à billes ou un palier lisse ;
- la quatrième roue menée est guidée en rotation sur le second arbre par un moyen de guidage tel qu'un roulement à aiguilles, un roulement à billes ou un palier lisse ;
- le mécanisme de commutation est lié mécaniquement au premier arbre par l'intermédiaire d'une cannelure permettant le coulissement axial d'une position désengagée à une position engagée ;
- le mécanisme de commutation et l'embrayage à friction peuvent chacun coopérer avec un actionneur pour transmettre le mouvement nécessaire au passage d'une position désengagée à une position engagée, l'actionneur étant par exemple de type électromécanique ou électromagnétique ou hydraulique ;
- un actionneur unique peut coopérer avec le mécanisme de commutation et l'embrayage à friction pour transmettre de manière coordonnée le mouvement nécessaire au passage d'une position désengagée à une position engagée ; l'actionneur étant par exemple de type électromécanique ou électromagnétique ou hydraulique ;
- la denture de l'embrayage à crabot et la denture de la première roue menée peuvent comporter des chanfreins d'extrémité permettant de favoriser un accostage progressif et sans chocs pendant les phases d'accouplement;
- le dispositif de roue libre comporte une bague interne, une bague externe et un organe de verrouillage comportant des éléments de blocage disposés entre la bague interne et la bague externe ;
- le dispositif de roue libre est monté de telle sorte qu'elle soit en statut "blocage" où la bague interne est menante pour entraîner en rotation la bague externe, et en statut "roue libre" où la bague externe est menante et n'entraîne pas en rotation la bague interne ;
- le dispositif de roue libre peut ne pas comprendre de bague interne et externe. Dans ce cas, les éléments de blocage de l'organe de verrouillage peuvent être par exemple reliés par une cage ;
- le dispositif de roue libre peut comporter un système d'actionnement permettant d'assurer la fermeture commandée de la roue libre ;
- l'embrayage à friction peut contenir une rangée de disques intérieurs portés par un premier support et une rangée de disques extérieurs portés par un second support. En position engagée, les disques intérieurs et les disques extérieurs sont solidarisés et en position désengagée, les disques intérieurs et les disques extérieurs sont désolidarisés ;
- le second support de l'embrayage à friction est lié mécaniquement au second arbre par l'intermédiaire d'une cannelure permettant le coulissement axial d'une position désengagée à une position engagée ;
- les dentures des engrenages peuvent être de type hélicoïdales ;
- la première roue menée et la troisième roue menée, et/ou la deuxième roue menée et la quatrième roue menée, et/ou la cinquième roue menée et la sixième roue menée, peuvent être des poulies entraînées en rotation par des courroies ;
- la première roue menée et la troisième roue menée, et/ou la deuxième roue menée et la quatrième roue menée, et/ou la cinquième roue menée et la sixième roue menée, peuvent être des roues dentées entraînées en rotation par des chaînes ;
- le mécanisme différentiel peut constituer l'organe de sortie de la boîte de vitesses, le mécanisme différentiel entraînant deux demi-arbres de sortie tournant potentiellement à des vitesses différentes et liés chacun directement ou indirectement à une roue du véhicule.

Selon un autre de ses aspects, l'invention a pour objet une boîte de vitesses à deux rapports de vitesses pour véhicule coopérant avec une machine électrique de traction et comprenant le mécanisme de transmissions décrit précédemment.

Grâce à cette architecture de boîte de vitesses, plusieurs fonctionnements peuvent être possibles :
- lorsque le premier rapport de vitesse de marche avant de la boîte de vitesses est engagé, le mécanisme de commutation peut être en position engagée ou en position désengagée, et l'embrayage à friction est en position désengagée ;
- lorsque le premier rapport de vitesse de marche arrière de la boîte de vitesses est engagé, le mécanisme de commutation est en position engagée, et l'embrayage à friction est en position désengagée ;
- lorsque le deuxième rapport de vitesse de marche avant de la boîte de vitesses est engagé, le mécanisme de commutation est en position désengagée, et l'embrayage à friction est en position engagée ;
- le mécanisme de commutation et l'embrayage à friction sont commandés de façon coordonnée pour réaliser tous les changements de rapport de vitesses ;
- lorsque le véhicule est à l'arrêt, l'engagement simultané du mécanisme de commutation et de l'embrayage à friction permet de réaliser un frein d'arrêt.

Selon un autre de ses aspects, l'invention a pour objet un groupe motopropulseur comprenant une boîte de vitesses telle que décrite précédemment et une machine électrique de traction.

D'autres caractéristiques et avantages de l'invention sont mis en évidence par la description ci-après d'exemples non limitatifs de réalisation des différents aspects de l'invention.

### BRÈVE DESCRIPTION DES FIGURES

La figure 1 illustre une vue en coupe schématique partielle d'un groupe motopropulseur comprenant une boîte de vitesses comprenant un mécanisme de transmission selon un premier mode de réalisation de l'invention.
La figure 2 est une vue en coupe schématique partielle du mécanisme de transmission selon le premier mode de réalisation de l'invention.
La figure 3 illustre une vue schématique partielle en perspective éclatée du mécanisme de transmission selon le premier mode de réalisation de l'invention.
La figure 4 illustre une vue schématique partielle en perspective d'un dispositif de roue libre du mécanisme de transmission selon le premier mode de réalisation de l'invention.
La figure 5 illustre une vue schématique partielle en perspective du groupe motopropulseur de la figure 1 selon le premier mode de réalisation de l'invention.
La figure 6 illustre une vue schématique partielle en coupe d'un groupe propulseur comprenant un mécanisme de transmission selon un deuxième mode de réalisation de l'invention.
La figure 7 illustre une représentation schématique de la chaîne cinématique du mécanisme de transmission selon le premier mode de réalisation de l'invention.
La figure 8 illustre une représentation schématique de la chaîne cinématique du mécanisme de transmission selon le deuxième mode de réalisation de l'invention.
La figure 9 illustre une représentation schématique de la chaîne cinématique du mécanisme de transmission selon un troisième mode de réalisation de l'invention.
La figure 10 illustre une représentation schématique de la chaîne cinématique du mécanisme de transmission selon un quatrième mode de réalisation de l'invention.
La figure 11 illustre une représentation schématique de la chaîne cinématique du mécanisme de transmission selon un cinquième mode de réalisation de l'invention.
La figure 12 illustre une représentation schématique de la chaîne cinématique du mécanisme de transmission selon un sixième mode de réalisation de l'invention.
La figure 13 illustre une représentation schématique de la chaîne cinématique du mécanisme de transmission selon un septième mode de réalisation de l'invention.
La figure 14 illustre une représentation schématique de la chaîne cinématique du mécanisme de transmission selon un huitième mode de réalisation de l'invention.
La figure 15 illustre une représentation schématique de la chaîne cinématique du mécanisme de transmission selon un neuvième mode de réalisation de l'invention.
La figure 16 est une vue en coupe schématique partielle du mécanisme de transmission selon un dixième mode de réalisation de l'invention.

Pour plus de clarté, les éléments fonctionnellement identiques ou similaires sont repérés par des signes de référence identiques sur l'ensemble des figures.

Les éléments de description déjà expliqués ne sont pas repris systématiquement, seules les particularités des différents modes de réalisations et exemples sont détaillés.

### DESCRIPTION DÉTAILLÉE DES MODES DE RÉALISATION

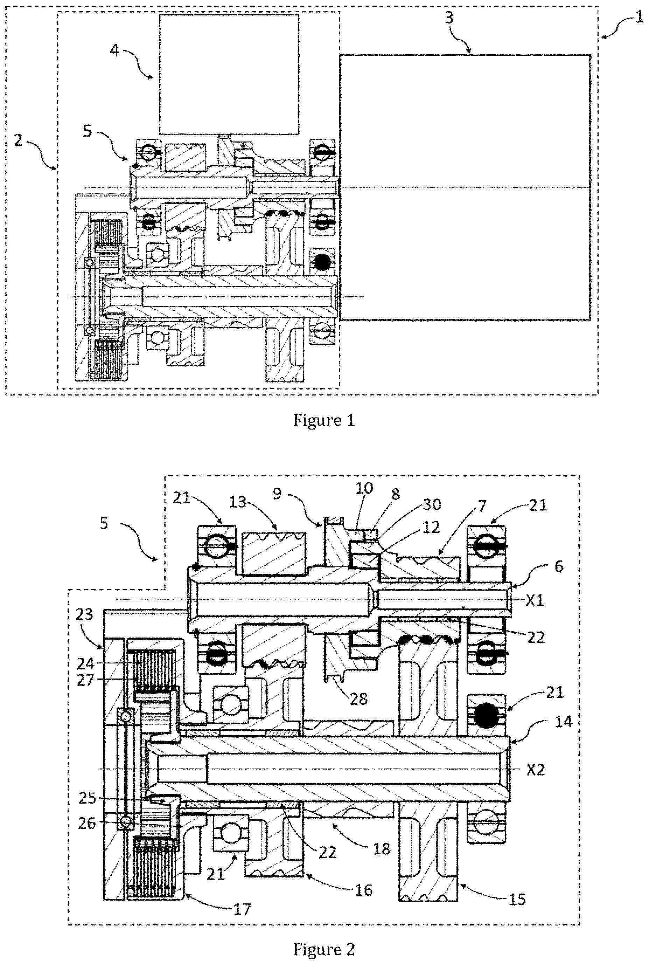

Sur la figure 1 est illustré un groupe motopropulseur 1 comportant une machine électrique de traction 3 et une boîte de vitesses 2 comprenant un mécanisme de transmission 5 selon un premier mode de réalisation.

La machine électrique de traction 3 peut comporter notamment un moteur électrique et des systèmes d'électronique de puissance permettant de piloter le moteur électrique comme par exemple un onduleur.

La machine électrique de traction 3 peut comporter à sa sortie un arbre rotor destiné à entraîner en rotation directement ou indirectement un arbre d'entrée de la boîte de vitesses 2.

La boîte de vitesses 2 comporte un carter non représenté qui peut être rigidement lié à la machine électrique de traction 3. Le carter peut contenir le mécanisme de transmission 5.

Sur la figure 2 est illustré le mécanisme de transmission 5 de la boîte de vitesses 2. Le mécanisme de transmission 5 comprend :
- un premier arbre 6 ayant un premier axe de rotation X1 ;
- une première roue menée 7, qui est ici sous forme d'un engrenage, coaxiale avec le premier axe de rotation X1 et guidée en rotation sur le premier arbre 6, la première roue menée 7 comprenant une première denture 8 ;
- un mécanisme de commutation 9 mobile entre au moins une première position engagée et une deuxième position désengagée, ledit mécanisme de commutation 9 comprenant une deuxième denture 10 qui coopère en rotation avec la première denture 8 dans la première position engagée et qui ne coopère pas en rotation avec la première denture dans la deuxième position désengagée ; et
- un dispositif de roue libre 11 comprenant un organe de verrouillage 12 coopérant en rotation directement ou indirectement avec d'une part le premier arbre 6, et coopérant en rotation directement ou indirectement avec d'autre part la première roue menée 7.

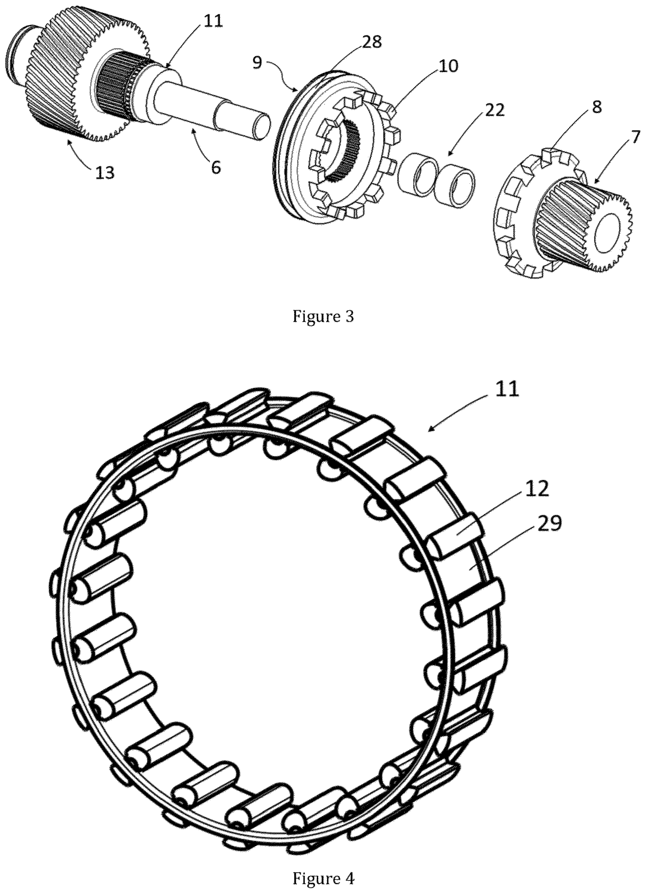

Le mécanisme de commutation 9 est par exemple un embrayage à crabot qui, actionné par un premier actionneur 4, translate axialement dans la direction de l'axe de rotation X1. Comme illustré plus en détail en figure 3, la liaison mécanique entre le premier actionneur 4 et l'embrayage à crabot 9 peut être réalisé par une rainure 28 aménagée sur le contour extérieur de l'embrayage à crabot 9 coopérant en translation avec une patte d'actionnement aménagée en sortie du premier actionneur 4. La liaison mécanique entre l'embrayage à crabot 9 et le premier arbre 6 peut être une cannelure permettant le coulissement axial d'une position désengagée à une position engagée. La deuxième denture 10 de l'embrayage à crabot 9 et la première denture 8 de la première roue menée 7 peuvent comporter des chanfreins d'extrémité.

Le carter peut supporter rigidement des actionneurs pouvant piloter le couplage et le désaccouplage du mécanisme de commutation 9 ou de l'embrayage à friction 17 visibles en figure 2. Ces actionneurs peuvent être du type électromécanique ou électromagnétique ou hydraulique.

L'organe de verrouillage 12 du dispositif de roue libre 11 peut être par exemple une pluralité de cames ("sprag" en anglais) ou de rouleaux ou de cliquets. La figure 4 illustre un exemple du dispositif de roue libre 11 pour lequel l'organe de verrouillage 12 est une pluralité de cames qui peuvent être reliées entre elles par une cage 29. Une partie radialement interne des cames coopèrent en rotation directement avec le premier arbre 6 et une partie radialement externe des cames coopère directement avec la première roue menée 7.

La roue menée 7 peut comporter une portion d'extension 30 s'étendant axialement, la portion d'extension 30 comportant une surface radialement interne pour coopérer en rotation avec la partie radialement externe de l'organe de verrouillage 12 et une surface radialement externe supportant la première denture 8.

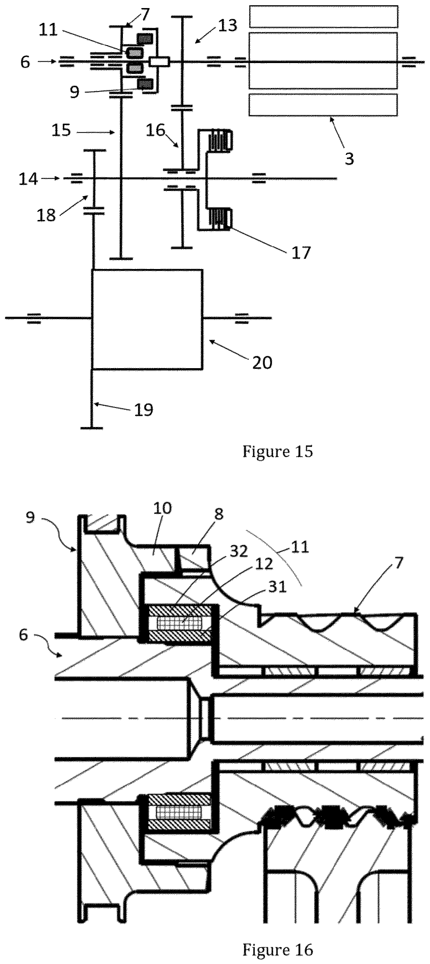

Sur la figure 16, un autre mode de réalisation du dispositif de roue libre 11 est illustré. L'organe de verrouillage 12 peut être inséré entre une bague interne 31 liée en rotation avec le premier arbre 6 et une bague externe 32 liée en rotation avec la première roue menée 7. La fixation du dispositif de roue libre 11 peut être réalisée par exemple par un processus d'emmanchement ou de soudage.

Le mécanisme de transmission 5 peut comprendre en outre :
- une deuxième roue menée 13 coaxiale avec le premier axe de rotation X1 et fixée en rotation sur le premier arbre 6 ;
- un second arbre 14 ayant un second axe de rotation X2 parallèle au premier axe de rotation X1 ;
- une troisième roue menée 15 coaxiale avec le second axe de rotation X2, fixée en rotation sur le second arbre 14 et coopérant en rotation avec la première roue menée 7 pour former un premier rapport de réduction de vitesse R1 entre le premier arbre 6 et le second arbre 14 ;
- une quatrième roue menée 16 coaxiale avec le second axe de rotation X2, guidée en rotation sur le second arbre 14 et coopérant en rotation avec la deuxième roue menée 13 pour former un second rapport de réduction de vitesse R2 entre le premier arbre 6 et le second arbre 14 ; et
- un embrayage à friction 17 coaxial au second axe de rotation X2, l'embrayage à friction 17 étant apte à coupler et désaccoupler en rotation la quatrième roue menée 16 et le second arbre 14.

L'embrayage à friction 17 représenté en figure 2 est par exemple un embrayage multi-disques humide. Alternativement, l'embrayage à friction 17 est un embrayage multi-disques fonctionnant à sec à l'extérieur de la boîte de vitesses 2, ou encore un embrayage avec un seul disque de frottement sec ou humide. L'embrayage à friction 17 contient une rangée de disques intérieurs 24 portés par un premier support 25 et une rangée de disques extérieurs 27 portés par un second support 26. En position engagée, les disques intérieurs 24 et les disques extérieurs 27 sont solidarisés et en position désengagée, les disques intérieurs 24 et les disques extérieurs 27 sont désolidarisés. Par exemple, le second support 26 de l'embrayage à friction 17 est lié mécaniquement au second arbre 14 par l'intermédiaire d'une cannelure permettant le coulissement axial d'une position désengagée à une position engagée. L'actionnement de l'embrayage à friction 17 est réalisé par l'intermédiaire du mouvement axial transmis par un deuxième actionneur 23 partiellement représenté.

Le mécanisme de commutation 9 et l'embrayage à friction 17 peuvent être commandés de façon coordonnée pour réaliser de manière progressive tous les changements de rapport de vitesses.

Dans le mode de réalisation illustré par les figures 1, 2 et 3, le mécanisme de transmissions 5 peut présenter en outre les caractéristiques suivantes :
- l'axe de rotation X1 est coaxial de l'axe de rotation de l'arbre rotor de la machine électrique de traction 3 ;
- le premier arbre 6 et le second arbre 14 sont guidés en rotation par rapport au carter de la boîte de vitesses 2 par l'intermédiaire des roulements 21; les roulements 21 peuvent être de type roulement à billes ou roulement à rouleaux coniques ou roulement à rouleaux cylindriques ;
- la première roue menée 7 est guidée en rotation sur le premier arbre 6 par un moyen de guidage 22 tel que par exemple un roulement à aiguilles, un roulement à billes ou un palier lisse ; ce moyen de guidage permet à la première roue menée 7 de tourner librement sans transmission de puissance lorsque la première denture 8 n'est pas entraînée par la deuxième denture 10 du mécanisme de commutation 9 ;
- la quatrième roue menée 16 est guidée en rotation sur le second arbre 14 par un moyen de guidage 22 tel que par exemple un roulement à aiguilles, un roulement à billes ou un palier lisse ; ce moyen de guidage permet à la quatrième roue menée 16 de tourner librement sans transmission de puissance lorsque l'embrayage à friction 17 est en position désengagée ;

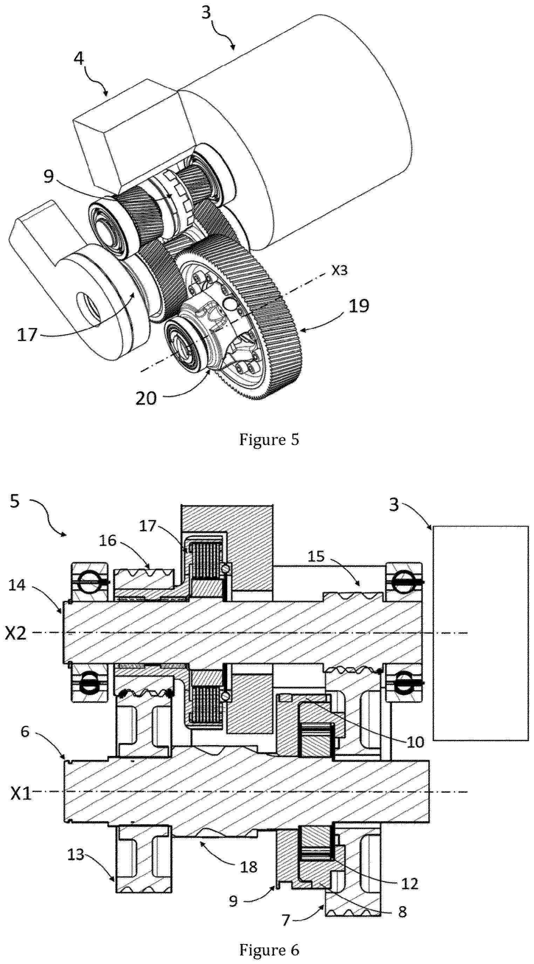

Comme illustré sur la figure 5, le mécanisme de transmission 5 peut comprendre en outre :
- une cinquième roue menée 18 fixée en rotation sur le second arbre 14 ;
- un troisième axe de rotation X3 parallèle au second axe de rotation X2 ;
- une sixième roue menée 19 coaxiale au troisième axe de rotation X3 et coopérant en rotation avec la cinquième roue menée 18 pour former un troisième rapport de réduction de vitesse R3 ; et
- un mécanisme différentiel 20 fixé sur la sixième roue menée 19.

Le mécanisme différentiel 20 peut constituer l'organe de sortie de la boîte de vitesses 2. De manière connue, le mécanisme différentiel peut entraîner deux demi-arbres de sortie (non représentés) tournant potentiellement à des vitesses différentes et liés chacun directement ou indirectement à une roue du véhicule.

Dans les figures 1, 2, 3 et 5, afin de réaliser la coopération en rotation correspondant aux rapports de réduction R1, R2 et R3, toutes les roues menées peuvent être des engrenages à dentures hélicoïdales. D'autres modes de réalisation non représentés sont possibles, notamment par des engrenages à dentures droites, ou bien par des poulies entraînées par des courroies, ou encore par des roues dentées entraînées par des chaînes.

Dans le premier mode de réalisation illustré sur la figure 1, le premier arbre 6 est entraîné en rotation par un arbre de sortie de la machine électrique de traction 3.

Le mode de réalisation représenté sur la figure 6 est un deuxième mode de réalisation de l'invention différant du premier par le fait que c'est ici le second arbre 14 qui est entraîné en rotation par un arbre de sortie de la machine électrique de traction 3. Dans ce cas, la cinquième roue menée 18 est fixée en rotation sur le premier arbre 6 afin de coopérer en rotation avec la sixième roue menée 19 fixée au différentiel 20.

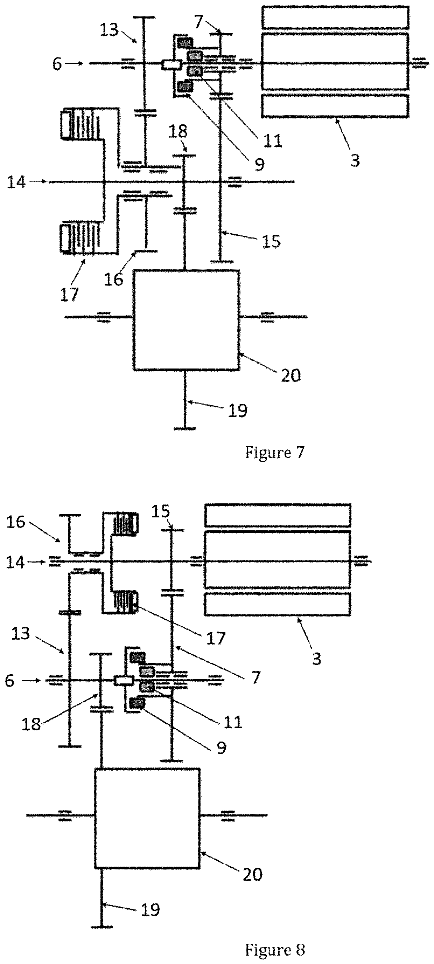

Les figures 7 à 15 représentent schématiquement et de façon non limitative plusieurs positionnement possibles des composants de la chaîne cinématique du mécanisme de transmissions 5. Les différents modes de réalisation montrent comment l'invention permet de choisir des positions relatives axiales et radiales de chaque composant portés par le premier arbre 6 et par le second arbre 14 afin de réduire l'espace total occupé par le mécanisme de transmission 5.

Dans la description des figures 7 à 15 ci-après, le positionnement des roues menées est défini de la façon suivante :
- "à droite" signifie "situé axialement du côté le plus proche de la machine électrique de traction 3" ;
- "à gauche" signifie "situé axialement du côté le plus éloigné de la machine électrique de traction 3".

Dans la description des figures 7 à 15 ci-après, le positionnement du mécanisme de commutation 9 et le dispositif de roue libre 11 est défini de la façon suivante :
- "côté droit" signifie "situé axialement dans la position immédiatement à proximité de la première roue menée 7 et du côté le plus proche de la machine électrique de traction 3" ;
- "côté gauche" signifie "situé axialement dans la position immédiatement à proximité de la première roue menée 7 et du côté le plus éloigné de la machine électrique de traction 3".

Dans la description des figures 7 à 15 ci-après, le positionnement de l'embrayage à friction 17 est défini de la façon suivante :
- "côté droit" signifie "situé axialement dans la position immédiatement à proximité de la quatrième roue menée 16 et du côté le plus proche de la machine électrique de traction 3" ;
- "côté gauche" signifie "situé axialement dans la position immédiatement à proximité de la quatrième roue menée 16 et du côté le plus éloigné de la machine électrique de traction 3".

Dans le premier mode de réalisation illustré par la figure 7 :
- le premier arbre 6 est entraîné en rotation par l'arbre de sortie d'une machine électrique de traction 3 ;
- la première roue menée 7 et la troisième roue menée 15 sont situées à droite ;
- la deuxième roue menée 13 et la quatrième roue menée 16 sont situées à gauche ;
- la cinquième roue menée 18 est située axialement entre la troisième roue menée 15 et la quatrième roue menée 16 ;
- le mécanisme de commutation 9 et le dispositif de roue libre 11 sont situés côté gauche ;
- l'embrayage à friction 17 est situé côté gauche.

Dans le deuxième mode de réalisation illustré par la figure 8 :
- le second arbre 14 est entraîné en rotation par l'arbre de sortie d'une machine électrique de traction 3 ;
- la première roue menée 7 et la troisième roue menée 15 sont situées à droite ;
- la deuxième roue menée 13 et la quatrième roue menée 16 sont situées à gauche ;
- la cinquième roue menée 18 est située axialement entre la première roue menée 7 et la deuxième roue menée 13 ;
- le mécanisme de commutation 9 et le dispositif de roue libre 11 sont situés côté gauche ;
- l'embrayage à friction 17 est situé côté droite.

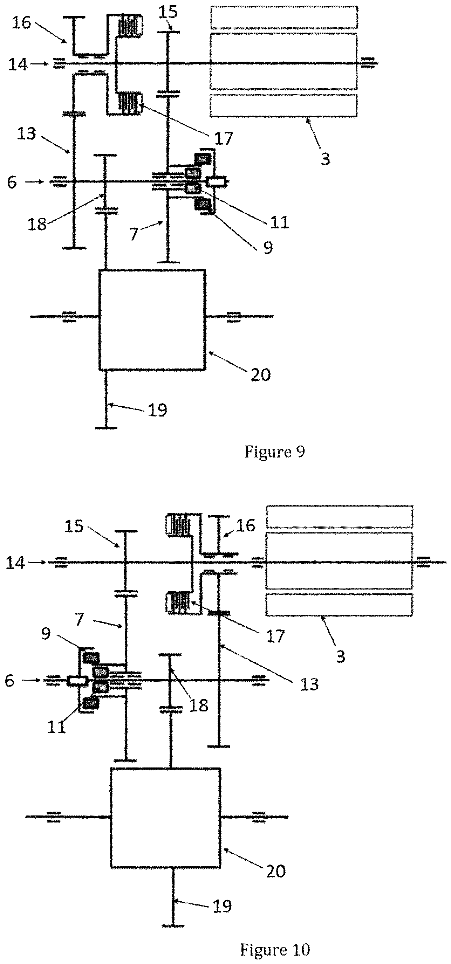

Dans le troisième mode de réalisation illustré par la figure 9 :
- le second arbre 14 est entraîné en rotation par l'arbre de sortie d'une machine électrique de traction 3 ;
- la première roue menée 7 et la troisième roue menée 15 sont situées à droite ;
- la deuxième roue menée 13 et la quatrième roue menée 16 sont situées à gauche ;
- la cinquième roue menée 18 est située axialement entre la première roue menée 7 et la deuxième roue menée 13 ;
- le mécanisme de commutation 9 et le dispositif de roue libre 11 sont situés côté droite ;
- l'embrayage à friction 17 est situé côté droite.

Dans le quatrième mode de réalisation illustré par la figure 10 :
- le second arbre 14 est entraîné en rotation par l'arbre de sortie d'une machine électrique de traction 3 ;
- la première roue menée 7 et la troisième roue menée 15 sont situées à gauche ;
- la deuxième roue menée 13 et la quatrième roue menée 16 sont situées à droite ;
- la cinquième roue menée 18 est située axialement entre la première roue menée 7 et la deuxième roue menée 13 ;
- le mécanisme de commutation 9 et le dispositif de roue libre 11 sont situés côté gauche ;
- l'embrayage à friction 17 est situé côté gauche.

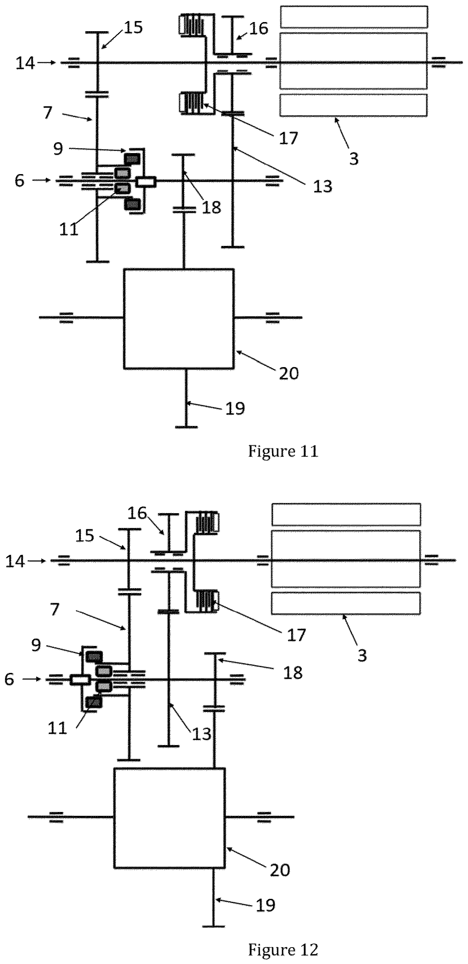

Dans le cinquième mode de réalisation illustré par la figure 11 :
- le second arbre 14 est entraîné en rotation par l'arbre de sortie d'une machine électrique de traction 3 ;
- la première roue menée 7 et la troisième roue menée 15 sont situées à gauche ;
- la deuxième roue menée 13 et la quatrième roue menée 16 sont situées à droite ;
- la cinquième roue menée 18 est située axialement entre la première roue menée 7 et la deuxième roue menée 13 ;
- le mécanisme de commutation 9 et le dispositif de roue libre 11 sont situés côté droite ;
- l'embrayage à friction 17 est situé côté gauche.

Dans le sixième mode de réalisation illustré par la figure 12 :
- le second arbre 14 est entraîné en rotation par l'arbre de sortie d'une machine électrique de traction 3 ;
- la première roue menée 7 et la troisième roue menée 15 sont situées à gauche ;
- la quatrième roue menée 16 est située à droite ;
- la cinquième roue menée 18 est située à droite ;
- la deuxième roue menée 13 est située axialement entre la première roue menée 7 et la cinquième roue menée 18 ;
- le mécanisme de commutation 9 et le dispositif de roue libre 11 sont situés côté gauche ;
- l'embrayage à friction 17 est situé côté droite.

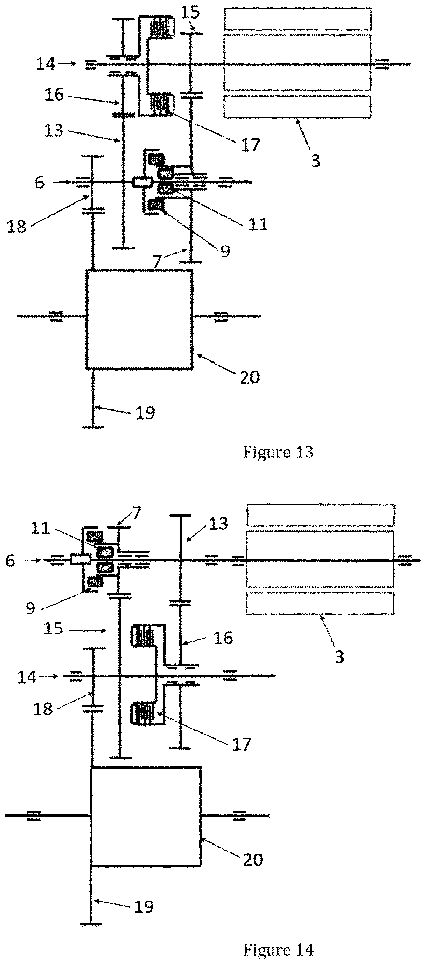

Dans le septième mode de réalisation illustré par la figure 13 :
- le second arbre 14 est entraîné en rotation par l'arbre de sortie d'une machine électrique de traction 3 ;
- la première roue menée 7 et la troisième roue menée 15 sont situées à droite ;
- la quatrième roue menée 16 est située à gauche ;
- la cinquième roue menée 18 est située à gauche ;
- la deuxième roue menée 13 est située axialement entre la première roue menée 7 et la cinquième roue menée 18 ;
- le mécanisme de commutation 9 et le dispositif de roue libre 11 sont situés côté gauche ;
- l'embrayage à friction 17 est situé côté droite.

Dans le huitième mode de réalisation illustré par la figure 14 :
- le premier arbre 6 est entraîné en rotation par l'arbre de sortie d'une machine électrique de traction 3 ;
- la deuxième roue menée 13 et la quatrième roue menée 16 sont situées à droite ;
- la première roue menée 7 est située à gauche ;
- la cinquième roue menée 18 est située à gauche ;
- la troisième roue menée 15 est située axialement entre la quatrième roue menée 16 et la cinquième roue menée 18 ;
- le mécanisme de commutation 9 et le dispositif de roue libre 11 sont situés côté gauche ;
- l'embrayage à friction 17 est situé côté gauche.

Dans le neuvième mode de réalisation illustré par la figure 15 :
- le premier arbre 6 est entraîné en rotation par l'arbre de sortie d'une machine électrique de traction 3 ;
- la deuxième roue menée 13 et la quatrième roue menée 16 sont situées à droite ;
- la première roue menée 7 est située à gauche ;
- la cinquième roue menée 18 est située à gauche ;
- la troisième roue menée 15 est située axialement entre la quatrième roue menée 16 et la cinquième roue menée 18 ;
- le mécanisme de commutation 9 et le dispositif de roue libre 11 sont situés côté droite ;
- l'embrayage à friction 17 est situé côté droite.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Mécanisme de transmission (5) pour une boîte de vitesses (2) à plusieurs rapports, le mécanisme de transmission (5) comprenant :
- un premier arbre (6) ayant un premier axe de rotation (X1) ;
- une première roue menée (7), notamment sous forme d'un engrenage, coaxiale avec le premier axe de rotation (X1) et guidée en rotation sur le premier arbre (6), la première roue menée (7) comprenant une première denture (8) ;
- un mécanisme de commutation (9) mobile entre au moins une première position engagée et une deuxième position désengagée, ledit mécanisme de commutation (9) comprenant une deuxième denture (10) qui coopère en rotation avec la première denture (8) dans la première position engagée et qui ne coopère pas en rotation avec la première denture (8) dans la deuxième position désengagée ;
- un dispositif de roue libre (11) comprenant un organe de verrouillage (12) coopérant en rotation directement ou indirectement avec d'une part le premier arbre (6), et coopérant en rotation directement ou indirectement avec d'autre part la première roue menée (7) ;
la première denture (8) et la deuxième denture (10) recouvrant axialement au moins en partie l'organe de verrouillage (12) dans la première position engagée.

2. Mécanisme de transmission (5) selon la revendication 1, dans lequel l'organe de verrouillage (12) comporte une partie radialement interne qui coopère en rotation, directement ou via une bague interne (31), avec le premier arbre (6) et une partie radialement externe qui coopère en rotation, directement ou via une bague externe (32), avec la première roue menée (7).

3. Mécanisme de transmission (5) selon l'une des revendications 1 et 2, dans lequel la première denture (8) et la deuxième denture (10) recouvre axialement 20 à 100% de la longueur axiale de l'organe de verrouillage (12) dans la première position engagée, de préférence la première denture (8) et la deuxième denture (10) recouvrant axialement 40 à 100% de la longueur axiale de l'organe de verrouillage (12) dans la première position engagée.

4. Mécanisme de transmission (5) selon l'une quelconque des revendications précédentes, dans lequel le mécanisme de commutation (9) est un embrayage à crabot, la deuxième denture (10) s'insérant axialement par coopération de formes dans la première denture (8) lors du passage de la deuxième position désengagée à la première position engagée.

5. Mécanisme de transmission (5) selon l'une quelconque des revendications précédentes, dans lequel l'organe de verrouillage (12) comprend notamment un ensemble de rouleaux ou de cames ou de cliquets.

6. Mécanisme de transmission (5) selon l'une quelconque des revendications précédentes comprenant en outre :
- une deuxième roue menée (13) coaxiale avec le premier axe de rotation (X1) et fixée en rotation sur le premier arbre (6) ;
- un second arbre (14) ayant un second axe de rotation (X2) parallèle au premier axe de rotation (X1) ;
- une troisième roue menée (15) coaxiale avec le second axe de rotation (X2), fixée en rotation sur le second arbre (14) et coopérant en rotation avec la première roue menée (7) pour former un premier rapport de réduction de vitesse (R1) entre le premier arbre (6) et le second arbre (14) ;
- une quatrième roue menée (16) coaxiale avec le second axe de rotation (X2), guidée en rotation sur le second arbre (14) et coopérant en rotation avec la deuxième roue menée (13) pour former un second rapport de réduction de vitesse (R2) entre le premier arbre (6) et le second arbre (14) ; et
- un embrayage à friction (17), notamment un embrayage à friction comportant plusieurs disques de frottement, coaxial au second axe de rotation (X2), l'embrayage à friction (17) étant apte à coupler et désaccoupler en rotation la quatrième roue menée (16) et le second arbre (14).

7. Mécanisme de transmission (5) selon la revendication 6, dans lequel le premier rapport de réduction de vitesses (R1) est supérieur au second rapport de réduction de vitesses (R2).

8. Mécanisme de transmission (5) selon l'une quelconque des revendications 1 à 7 comprenant en outre :
- une cinquième roue menée (18) fixée en rotation sur le second arbre (14) ;
- un troisième axe de rotation (X3) parallèle au second axe de rotation (X2) ;
- une sixième roue menée (19) coaxiale au troisième axe de rotation (X3) et coopérant en rotation avec la cinquième roue menée (18) pour former un troisième rapport de réduction de vitesse (R3) ; et
- un mécanisme différentiel (20) fixé sur la sixième roue menée (19).

9. Mécanisme de transmission (5) selon la revendication 8 en combinaison avec l'une quelconque des revendications 6 à 7, dans lequel la première roue menée (7) et la troisième roue menée (15) sont des engrenages, et/ou la deuxième roue menée (13) et la quatrième roue menée (16) sont des engrenages, et/ou la cinquième roue menée (18) et la sixième roue menée (19) sont des engrenages.

10. Mécanisme de transmission (5) selon la revendication 8 ou 9, dans lequel le premier arbre (6) est apte à être entraîné en rotation par un arbre de sortie d'une machine électrique de traction (3).

11. Mécanisme de transmission (5) selon l'une quelconque des revendications 1 à 7 comprenant en outre :
- une cinquième roue menée (18) fixée en rotation sur le premier arbre (6) ;
- un troisième axe de rotation (X3) parallèle au second axe de rotation ;
- une sixième roue menée (19) coaxiale au troisième axe de rotation (X3) et coopérant en rotation avec la cinquième roue menée (18) pour former un troisième rapport de réduction de vitesse (R3) ; et
- un mécanisme différentiel (20) fixé sur la sixième roue menée (19).

12. Mécanisme de transmission (5) selon la revendication 11 en combinaison avec l'une quelconque des revendications 6 à 7, dans lequel la première roue menée (7) et la troisième roue menée (15) sont des engrenages, et/ou la deuxième roue menée (13) et la quatrième roue menée (16) sont des engrenages, et/ou la cinquième roue menée (18) et la sixième roue menée (19) sont des engrenages.

13. Mécanisme de transmission (5) selon la revendication 11 ou 12, dans lequel le second arbre (14) est apte à être entraîné en rotation par un arbre de sortie d'une machine électrique de traction (3).

14. Boîte de vitesses (2) à deux rapports de vitesses pour véhicule apte à coopérer avec une machine électrique de traction (3), comprenant un mécanisme de transmissions (5) selon l'une quelconque des revendications 1 à 13.

15. Groupe motopropulseur (1) comprenant une boîte de vitesses (2) selon la revendication 14 et une machine électrique de traction (3).
